# EUROPÄISCHE PATENTSCHRIFT

(11) **EP 2 576 065 B1**
(45) Veröffentlichungstag und Bekanntmachung des Hinweises auf die Patenterteilung: **05.12.2018**
(21) Anmeldenummer: 11782023.3
(22) Anmeldetag: 27.05.2011
(51) Int. Cl.: B01L 3/00

(54) **FLUSSZELLE MIT HOHLRAUM UND DIAPHRAGMA**
FLOW CELL WITH CAVITY AND DIAPHRAGM
CELLULE A ECOULEMENT AVEC CAVITE ET DIAPHRAGME

(30) Priorität: 02.06.2010 DE 102010022550
(43) Veröffentlichungstag der Anmeldung: 10.04.2013
(73) Patentinhaber: thinXXS Microtechnology AG, 66482 Zweibrücken (DE)
(72) Erfinder: WEBER, Lutz, 66981 Münchweiler (DE)
(74) Vertreter: Bernhardt, Reinhold
(86) Internationale Anmeldenummer: PCT/DE2011/050016
(87) Internationale Veröffentlichungsnummer: WO 2012/048685

(56) Entgegenhaltungen:
- WO-A1-2006/098817
- DE-A1-102009 001 257
- US-A1- 2002 166 585
- US-B1- 6 293 012
- US-B1- 6 293 012
- US-B1- 6 406 605

## Beschreibung

Die Erfindung betrifft eine Anordnung aus einer Flusszelle und einer Vorrichtung zum Betreiben der Flusszelle, wobei die Flusszelle mindestens zwei Lagen aufweist, zwischen denen durch die Betreibervorrichtung unter Auswölbung von wenigstens einer der beiden Lagen eine Hohlraumstruktur herstellbar und eine bestehende Hohlraumstruktur veränderbar ist.

Anordnungen mit diesen Merkmalen gehen aus der DE 10 2009 001 257 A1, der US 2002/166585 A1, der US 6 293 012 B1 und der WO 2006/098817 A1 hervor.

Die DE 10 2009 001 257 A1 beschreibt eine Anordnung, in welcher eine flexible, mit einer Substratlage verbundene Lage durch ein Aktuatorelement der Betreibervorrichtung in einen Hohlraum in dem Substrat hinein auswölbbar und dadurch eine Ventilöffnung schließbar ist.

Die US 2002/166585 A1 offenbart eine Flusszelle mit einer Hohlräume trennenden flexiblen Lage. Durch unterschiedliche Druckbeaufschlagung der Hohlräume mit Hilfe der Betreibervorrichtung kann der Hohlraumquerschnitt und damit der Fluiddurchfluss durch die Hohlräume reguliert werden. In einer weiteren dort beschriebenen Ausführungsform ist eine flexible, mit Magnetmaterial belegte Lage der Flusszelle durch Magnetelemente der Betreibervorrichtung unter Verschluss einer Ventilöffnung in einen Hohlraum in der Flusszelle hinein einwölbbar.

Aus der US 6 293 012 B1 geht eine Flusszelle mit einem durch eine flexible Lage gebildeten Ventil hervor. Beim Anlegen eines Unterdrucks durch die Betreibervorrichtung wölbt sich die Lage aus und bildet einen Verbindungsraum zwischen zwei Ventilöffnungen.

Die WO 2006/098817 A1 beschreibt eine Flusszelle mit einer zwischen zwei starren Lagen angeordneten flexiblen Lage, die durch einen Aktuator der Betreibervorrichtung unter Ausübung einer Pump- oder Ventilfunktion auswölbbar ist.

Aus der WO 001993022058 A1, der US 6,494,230 und der DE 103 36 849 A1 bekannte mikrofluidische Flusszellen weisen fluiddicht miteinander verbundene Lagen auf. Durch Ausnehmungen in wenigstens einer der Lagen ist zwischen den Lagen eine Hohlraumstruktur gebildet, die ein mehr oder weniger verzweigtes Kanalnetz zur Leitung von Fluidströmen umfasst. Die Hohlraumstruktur steht in Verbindung mit Ein- oder/und Auslassöffnungen in wenigstens einer der Lagen. Über die Ein- oder/und Auslassöffnungen kann mit Hilfe einer Betreibervorrichtung Fluid in die Hohlraumstruktur der Flusszelle eingeführt oder/und von dort abgeführt werden.

Die Fertigung solcher mikrofluidischen Flusszellen erfordert einen hohen Aufwand. Dies betrifft insbesondere die präzise Mikrostrukturierung der Ausnehmungen und die passgenaue, fluiddichte Verbindung der Lagen. Fertigungstoleranzen im Mikrometerbereich und darunter sind einzuhalten.

Der Erfindung liegt die Aufgabe zugrunde, eine neue, mit einer Betreibervorrichtung zu verwendende Flusszelle zu schaffen, die sich mit geringerem Aufwand herstellen lässt.

Die neue Anordnung nach der Erfindung ist dadurch gekennzeichnet, dass die Betreibervorrichtung ein zum Andrücken an die Flusszelle vorgesehenes Element mit einer Vertiefung umfasst, wobei in die Vertiefung des angedrückten Elements hinein die betreffende Lage unter Bildung der Hohlraumstruktur auswölbbar ist und dass das angedrückte Element unter Zusammendrücken der Lagen die Hohlraumstruktur lateral fluiddicht begrenzt.

Indem bei der Flusszelle nach der Erfindung eine Hohlraumstruktur erfindungsgemäß erst im Zusammenwirken mit der Betreibervorrichtung erzeugt oder fertiggestellt wird, eröffnen sich Möglichkeiten für eine vereinfachte Herstellung. Die Notwendigkeit einer Mikrostrukturierung zur Erzeugung der Hohlraumstruktur einschl. der leckagefreien Montage der Flusszelle kann entfallen. Durch Anpassung der Betreibervorrichtung kann die gleiche, ggf. unstrukturierte Flusszelle für verschiedene Anwendungen eingesetzt werden.

Die Betreibervorrichtung kann zur Auswölbung der betreffenden Lage durch direkte Erzeugung einer auf die Lage einwirkenden Kraft oder/und indirekt durch Eindrücken eines Fluids in die Flusszelle vorgesehen sein. Bei einer direkt erzeugten Kraft kann es sich z.B. um eine Saugkraft oder Magnetkraft handeln. Im letzteren Fall erschließt sich ein zwischen aneinander anliegende Lagen eingedrücktes Fluid selbst erst die Hohlraumstruktur.

Das andrückbare Element weist zweckmäßig eine elastische Oberfläche auf, welche Abweichungen der Flusszelle von einer planaren Form ausgleicht.

Durch einen an die Vertiefung angelegten Unterdruck lässt sich eine Saugkraft erzeugen, die für die Auswölbung der der Vertiefung zugewandten Lage der Flusszelle sorgt.

Vorzugsweise weist die Betreibervorrichtung ein dem genannten Element gegenüberliegendes Gegenelement auf, ggf. mit einer zu der Vertiefung korrespondierenden Vertiefung, an die ein dem Unterdruck in der Vertiefung des ersteren Elements entgegenwirkender Unterdruck gelegt werden kann. Zwischen dem Element und dem Gegenelement lässt sich eine aus zwei Folien gebildete Flusszelle einklemmen und die beiden Folien lassen sich unter Bildung der Hohlraumstruktur zwischen den Folien in entgegengesetzten Richtungen auswölben.

In einer alternativen Ausführungsform kann das Gegenelement über seine Andruckfläche verteilte Saugporen aufweisen. In diesem Fall lässt sich bei einer Flusszelle aus zwei Folien eine der beiden Folien, während sich die andere auswölbt, in einer Ebene festhalten. Zur Bildung der Saugporen kann das Gegenelement eine Einlage aus einem Sintermetall aufweisen.

Zur Aufrechterhaltung einer planaren Form von einer der beiden Folien könnte alternativ die dem Gegenhalter zugewandte Folie mit dem Gegenhalter verklebt sein, z.B. durch ein doppeltklebendes Klebeband.

In weiterer Ausgestaltung der Erfindung umfasst die Betreibervorrichtung Einrichtungen zur Steuerung des Ausmaßes der Auswölbung. Je nach Größe des angelegten Unterdrucks an eine der Lagen, kann die Lage unterschiedlich weit bis hin zur vollständigen Anlage gegen die Wand der Vertiefung ausgewölbt werden. Nach vollständiger Anlage gegen die Wand der Vertiefung hängt der gebildete Hohlraumquerschnitt dann nicht mehr von der Größe des Unterdrucks ab. Solange die ausgewölbte Lage die Wand der Vertiefung noch nicht erreicht hat, lässt sich das Ausmaß der Auswölbung stufenlos durch Variation des Unterdrucks steuern.

Vorzugsweise kann an die genannte Vertiefung auch ein Überdruck angelegt werden, der es ermöglicht, die Bildung der Hohlraumstruktur schnell rückgängig zu machen und in der Hohlraumstruktur enthaltenes Fluid vollständig aus der Hohlraumstruktur herauszudrücken. Vorteilhaft lässt sich so die Effektivität von Spülprozessen in Flusszellen verbessern und/oder die Kontamination durch verschiedene, nacheinander durch das Kanalnetzwerk zu transportierende Fluide verringern.

In weiterer Ausgestaltung der Erfindung kann das an die Flusszelle ansetzbare Element oder Gegenelement wenigstens eine Durchgangsöffnung, z.B. für eine Anschlussleitung oder ein senkrecht zur Lagenebene bewegliches Ventilelement, aufweisen. Ein Ventilelement kann gezielt z.B. einen Fluidleitungskanal der gebildeten Hohlraumstruktur unterbrechen.

Ein parallel zur Lagenebene verschiebbares Element kann zum Transport von Fluid innerhalb der Hohlraumstruktur oder zur räumlichen Veränderung der erzeugten Hohlraumstruktur genutzt werden.

Es versteht sich, dass die Hohlraumstruktur vorzugsweise wenigstens einen Fluidleitungskanal, insbesondere ein Kanalnetzwerk umfasst. Wenigstens eine der beiden Lagen weist mindestens eine mit der Hohlraumstruktur verbundene Öffnung auf, eine Auslass- oder/und Einlassöffnung.

In einer Ausführungsform kann es sich bei einer der beiden Lagen um eine flexible Folie und bei der anderen Lage um eine gegenüber der flexiblen Folie steifere Substratplatte handeln. In einer bevorzugten Ausführungsform bestehen die flexible Folie und die steifere Substratplatte aus dem gleichen Material, insbesondere dem gleichen Kunststoffmaterial. Bei genügend steifer Substratplatte genügt die Verwendung eines einzigen, an die Flusszelle ansetzbaren Elements. Ein Gegenelement ist nicht erforderlich.

Wie oben bereits erwähnt, könnte die Flusszelle als Lagen auch zwei flexible Folien umfassen. Auch Kombinationen zwischen einer steiferen Platte und zwei an einander gegenüberliegenden Plattenflächen anliegende Folien sind möglich, wobei jeweils zwischen Platte und Folie eine Hohlraumstruktur gebildet werden kann. In der Substratplatte können dann die Hohlraumstrukturen verbindende Ausnehmungen gebildet sein.

Wenigstens eine der beiden Lagen ist vorzugsweise elastisch verformbar, so dass sich eine gebildete Hohlraumstruktur von selbst zurückbilden kann.

In weiterer Ausgestaltung der Erfindung sind die beiden Lagen mit ihren einander zugewandten Flächen angrenzend an die Hohlraumstruktur oder/und am Rand von wenigstens einer der beiden Lagen fluiddicht miteinander verbunden.

Reicht die Verbindung zwischen den beiden Lagen bis an die Hohlraumstruktur heran, so ist das angesetzte Element bzw. Gegenelement für die Begrenzung des Hohlraums ggf. nicht maßgebend. Der Hohlraum kann lateral durch die Verbindung zwischen den Lagen begrenzt sein. Zur Verbindung der Lagen kommen Schweiß- und Klebeverbindungen in Betracht. Auch Verbindungen durch ein doppeltklebendes Klebeband sind möglich.

In einer bevorzugten Ausführungsform der Erfindung sind die Lagen lediglich am Rand miteinander umlaufend fluiddicht verbunden und für die seitliche Randbegrenzung der Hohlraumstruktur ist das Element und ggf. Gegenelement verantwortlich. Die beiden Lagen brauchen letztlich gar nicht miteinander verbunden zu sein. In letzterem Fall können die Lagen aus verschiedenen, durch Stoffschluss nicht klebemittelfrei miteinander verbindbaren Materialien bestehen, z.B. aus Glas und Kunststoff, wobei solche Materialpaarungen unter bestimmten Bedingungen vorteilhaft oder sogar unerlässlich für die durchzuführende Untersuchungen sein können.

Die Erfindung wird nachfolgend anhand von Ausführungsbeispielen und der beiliegenden, sich auf diese Ausführungsbeispiele beziehenden Zeichnungen weiter erläutert. Es zeigen:
- Fig. 1: eine Flusszelle nach der Erfindung,
- Fig. 2: die Flusszelle von Fig. 1 in einer Explosionsdarstellung,
- Fig. 3: die Flusszelle in der Darstellung von Fig. 2 mit einem an die Flusszelle andrückbaren Element für die Bildung einer Kanalstruktur,
- Fig. 4: die Flusszelle von Fig. 1 zwischen dem Element von Fig. 3 und einem an die dem Element von Fig. 3 gegenüberliegende Seite der Flusszelle ansetzbaren Gegenelement,
- Fig. 5 bis 12: die Bildung von Hohlraumstrukturen erläuternde Darstellungen,
- Fig. 13 bis 15: Flusszellen mit gebildeten Hohlraumstrukturen und bei den Hohlraumstrukturen angeordnete Elektroden,
- Fig. 16 bis 20: weitere, die Bildung von Hohlraumstrukturen erläuternde Darstellungen,
- Fig. 21 bis 25: weitere Funktionen von Betreibervorrichtungen erläuternde Darstellungen, und
- Fig. 26 und 27: ein weiteres Ausführungsbeispiel für eine erfindungsgemäße Anordnung mit einer ein Substrat aus Glas aufweisenden Flusszelle.

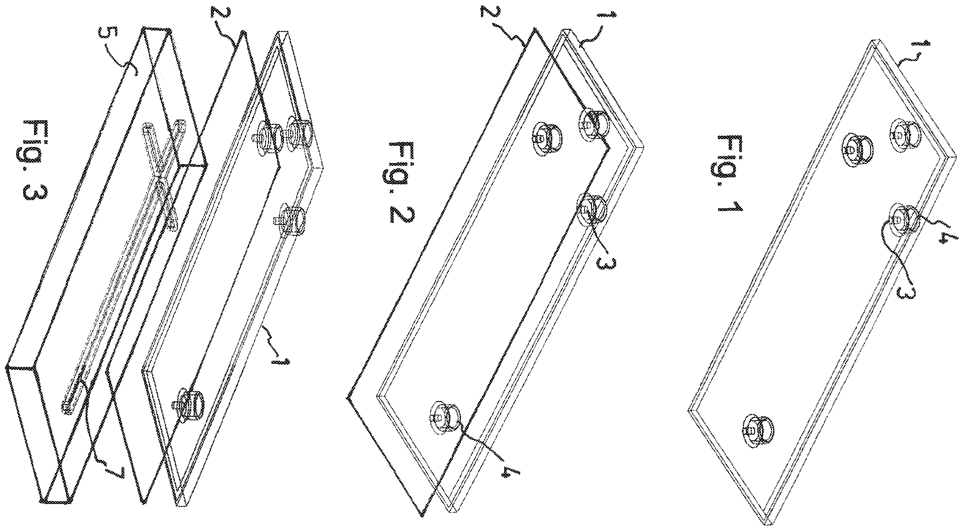

Eine in den Figuren 1 bis 4 gezeigte Flusszelle umfasst ein plattenförmiges Substrat 1, das eine erste Lage bildet, und eine flexible, elastische Folie 2, die eine zweite Lage bildet. An Durchgangslöcher 3, die in dem Substrat 1 gebildet sind, schließt sich auf der der Folie 2 abgewandten Seite des Substrats 1 jeweils ein rohrförmiges Anschlussstück 4 an, das zur Zu- oder Abführung von Fluid mit einer Pipette, einem LU ER-Verbinder, einem Schlauch oder dergleichen verbindbar ist. Das Substrat 1 besteht in dem gezeigten Ausführungsbeispiel aus einem Kunststoff und ist spritzgegossen. Die Folie 2, deren Dicke vorzugsweise zwischen 0,005 und 0,2 mm liegt, besteht ebenfalls aus einem Kunststoff, vorzugsweise dem gleichen Kunststoff wie das Substrat, bevorzugt aus Kunststoffen wie PMMA, PC, PS, PP, PE, PEEK, COC, COP oder einem anderen üblicherweise in Flusszellen verwendeten Kunststoff. Insbesondere für das Substrat kommen auch andere Materialien, wie z.B. Glas oder Silizium, in Betracht.

Weder das Substrat 1 noch die Folie 2 weisen in dem gezeigten Ausführungsbeispiel eine Strukturierung auf. In einem Randbereich sind die Folie 2 und das Substrat 1 dauerhaft oder lösbar miteinander verbunden, z.B. verklebt oder verschweißt (z.B. durch Ultraschallschweißen oder Laserschweißen). Zur Verbindung von Folie und Substrat ließe sich auch ein doppeltklebendes Klebeband nutzen, wozu insbesondere das Substrat 1 einen das Klebeband mit der Substratoberfläche fluchtend aufnehmende Vertiefung aufweisen kann. Zur lösbaren Verbindung von Folie 2 und Substrat 1 ließen sich ferner am Rand angreifende Klemmelemente, insbesondere ein Klemmrahmen, verwenden.

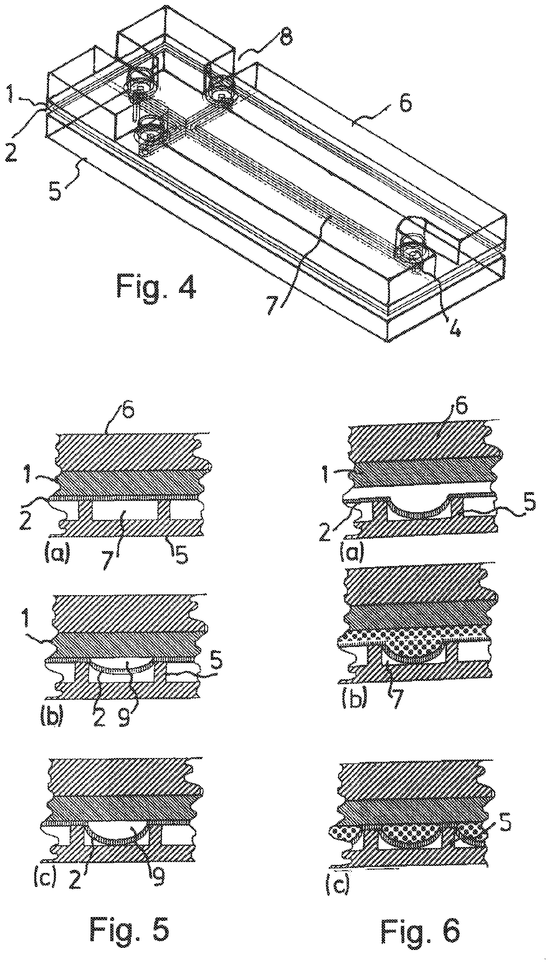

Ein in Fig. 3 gezeigtes plattenförmiges Element 5 weist eine Vertiefung 7 auf, die durch sich kreuzende Nuten gebildet ist. Das Element 5 bildet zusammen mit einem in Fig. 4 gezeigten Gegenelement 6 eine Klemmeinrichtung, die Bestandteil einer im Übrigen nicht gezeigten Vorrichtung zum Betreiben der Flusszelle von Fig. 1 ist. Wie aus Fig. 4 hervorgeht, lässt sich die Flusszelle 1 zwischen dem Element 5 und dem Gegenelement 6 derart einklemmen, dass das Element 5 mit der Ausnehmung 7 zur Anlage gegen die Folie 2 und das Element 6, das Randausnehmungen 8 für die Aufnahme der vorstehenden Anschlussstücke 4 aufweist, gegen das Substrat 1 zur Anlage kommen.

Im Betrieb der Flusszelle sind die Anschlussstücke 4 jeweils mit einer ein Fluid zu- oder/und abführenden Leitung oder zum Zweck der Entlüftung beim Fluidtransport mit der umgebenden Atmosphäre verbunden und die Flusszelle ist zwischen dem Element 5 und dem Element 6 eingeklemmt. Das Element 5 drückt, ausgenommen im Bereich der Vertiefung 7, die Folie 2 gegen das Substrat 1. Die oben genannte, die Elemente 5,6 umfassende Betreibervorrichtung weist ferner eine Saugeinrichtung auf, durch die an die Vertiefung 7 zwischen der Folie 2 und dem Element 5 ein Unterdruck anlegbar ist. Infolge der durch diesen Unterdruck erzeugten Saugkraft wölbt sich die flexible elastische Folie 2 unter Bildung einer Hohlraumstruktur zwischen Folie und Substrat in die Vertiefung 7 hinein, wie dies aus der Fig. 5b und c hervorgeht. Es bildet sich ein Fluidfeitungskanal 9, der seitlich durch das die Folie 2 gegen das Substrat 1 pressende Element 5 begrenzt und fluiddicht verschlossen ist. In dem beschriebenen Betriebszustand weist die Flusszelle zwischen dem Substrat 2 und der Folie 1 eine der Grundform der Vertiefung 7 entsprechende Kanalstruktur auf.

Das Ausmaß der Auswölbung der Folie 2 in die Vertiefung 7 hinein hängt von der Größe des angelegten Unterdrucks ab. Typische Aspektverhältnisse liegen zwischen 2 und 1000. In dem gezeigten Ausführungsbeispiel umfasst die genannte Betreibervorrichtung eine Steuerung zur Variation des Unterdrucks und damit zur Variation des Querschnitts des Fluidleitungskanals 9 bzw. der Hohlraumstruktur. Gemäß Fig. 5c ist der Unterdruck so bemessen, dass die Folie 2 gegen den Boden der Vertiefung 7 anliegt. Bei vollständiger Anlage der Folie 2 gegen die Vertiefungswände ist durch Unterdruckverringerung keine Querschnittserhöhung des Fluidleitungskanals mehr möglich. Um ein vollständiges Anlegen der Folie an die Wand der Vertiefung zu ermöglichen, kann die Form der Vertiefung an die Form der sich auswölbenden Folie angepasst sein.

Das Gegenelement 6 besteht vorzugsweise aus einem Metall oder Glas. Im letzteren Fall erlaubt es eine visuelle Beobachtung der Fluidströmungen in der Flusszeile. Hierzu kann ggf. auch lediglich ein gläsernes Beobachtungsfenster ausreichend sein. Bei dem Element 5 handelt es sich vorzugsweise um ein Metallteil.

Das Gegenelement 6 kann entfallen, wenn das Substrat 1 eine genügend hohe Steifigkeit besitzt.

Vorzugsweise erlaubt die oben genannte Steuerung der Betreibervorrichtung eine Variation des an die Vertiefung 7 angelegten Drucks bis in den positiven Bereich. Durch Anlegen eines Überdrucks kann die Hohlraumstruktur der Flusszelle nach deren Gebrauch vorteilhaft schnell und mehr oder weniger vollständig entleert werden.

Die oben beschriebene Möglichkeit zur Erzeugung einer Hohlraumstruktur mit variablen Abmessungen hat besondere Bedeutung für die optische Detektion (Absorption, Transmission, Reflexion. Fluoreszenz). Bei variablem Hohlraumquerschnitt kann das Licht unterschiedliche Dicken des Fluids durchdringen. So lassen sich in der gleichen Messposition durch Änderung des Hohlraumquerschnitts verschiedene Konzentrationsbereiche eines Analyten vermessen. Variable Querschnitte haben ferner Bedeutung für die Durchführung einer Kapillar-Elektrophorese, bei der in der Regel Medien mit hoher Viskosität, wie Gele als Trägerflüssigkeiten für eine zu analysierende, mittels Elektrophorese aufzutrennende DNA-Probe, verwendet werden. Die Auftrennung gelingt um so besser, je kleiner der Kanalquerschnitt ist. Aufgrund der hohen Viskosität des Gels ist die Befüllung des Kanals trotz großer Drücke zeitraubend. Hier wäre die Möglichkeit zur Einstellung eines Fluidleitungskanals mit großem Querschnitt hilfreich.

Gemäß Fig. 6 besteht die Möglichkeit, in der Phase der Befüllung der Flusszelle die Folie 2 durch das Element 5 noch nicht gegen das Substrat 1 zu pressen, so dass ein Abstand zwischen der Folie 2 und dem Substrat 1 verbleibt. Eingepresstes, durch die randseitige Verbindung von Folie und Substrat eingeschlossenes Fluid wölbt durch seinen Eigendruck die Folie 2 in die Vertiefung 7 hinein. Alternativ kann das Element 5 weitere, vorzugsweise federnd oder elastisch gelagerte Stege besitzen, welche bei Anlage an der Folie 2 einen im Vergleich zum Hohlraum 7 deutlich größeren Hohlraum für die Gelbefüllung bilden. Gleichzeitig sorgt an der Vertiefung 7 anliegender Unterdruck für eine solche Wölbung. Erst nach der Befüllung erfolgt die eigentliche Kanalbildung durch Andrücken der Folie 2 gegen das Substrat 1 (Fig. 6c).

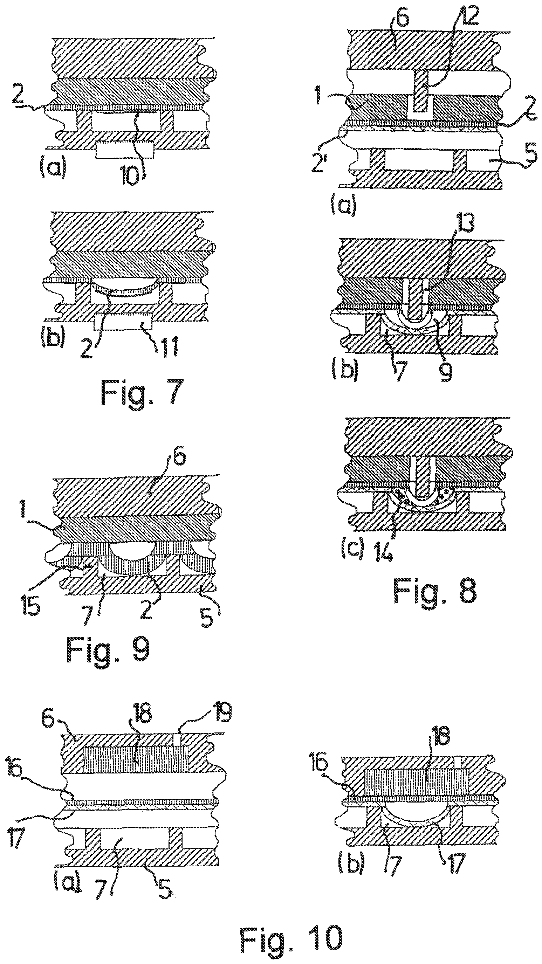

Wie aus den Figuren 7 bis 9 hervorgeht, kann eine die Folie 2 in die Vertiefung 7 hinein auswölbende Kraft auch auf andere Weise als durch Anlegen eines Unterdrucks an die Vertiefung 7 erzeugt werden.

Im Bereich der Vertiefung 7 kann die Folie 2 mit einer metallischen, durch einen Dünnschichtprozess oder galvanisch aufgebrachten Beschichtung 10 versehen sein, auf die durch ein elektrisches Feld oder/und Magnetfeld eine Kraft ausgeübt werden kann. Durch eine ein Magnetfeld erzeugende Einrichtung 11 der Betreibervorrichtung lässt sich daher die Folie 2 in die Vertiefung 7 hinein auswölben (Fig. 7b).

Bei einem in Fig. 8 gezeigten Ausführungsbeispiel sind neben einem Substrat 1 zwei flexible, elastische Folien 2 und 2' vorgesehen. Ein Gegenelement 6 weist gegenüber einer Vertiefung 7 in einem Element 5 einen Stempel 12 auf, der in einen Durchgang 13 im Substrat 1 eingreift. Die Breite des Durchgangs 13 ist kleiner als die Breite der Vertiefung 7 in dem Element 5. Die dem Substrat zugewandte Folie 2 ist mit dem Substrat 1 fest verbunden. Die Folien 2,2' liegen lose aneinander an. In dem durch die Elemente 5,6 zusammengeklemmten Zustand wölbt der Stempel 12 des Gegenelements 6 die Folien 2,2' in die Vertiefung 7 hinein aus. Zwischen den Folien 2 und 2' bildet sich ein Kanal 9 zur Leitung eines Fluids 14 (Fig. 8c). Vorzugsweise ist die Dicke der inneren Folie 2 kleiner als die Dicke der äußeren Folie 2'. Alternativ besteht die innere Folie 2 aus einem weichen Material wie einem Silikon oder thermoplastischem Elastomer oder Gummi. Bei gleicher Dicke und Auslenkung ergibt sich dann eine kleinere Kraft des Stempels 12 oder bei gleicher Kraft eine größere Dicke der Folie 2. Fertigungstechnisch vorteilhaft wird die elastische Folie 2 oder ein Folienbereich einstückig mit dem Substrat 1 durch Zwei-Komponentenspritzgießen hergestellt. Für die Funktion der Flusszelle ist es wesentlich, dass das elastische Material nicht mit dem zu transportierenden Fluid in Kontakt kommt.

Bei dem Ausführungsbeispiel von Fig. 9 ist eine gummiartige Folie 2 aus einem Elastomer (Silikon, TPE) verwendet. Eine Vertiefung 7 begrenzende Stege 15 eines Elements 5 drücken die Folie 2 gegen ein Substrat 1, wobei sich die Folie 2 zwischen den Stegen 15 entgegen der Andruckkraft der Stege 15 in die Vertiefung 7 hinein auswölbt. Typische Foliendicken können hierbei im Millimeterbereich liegen.

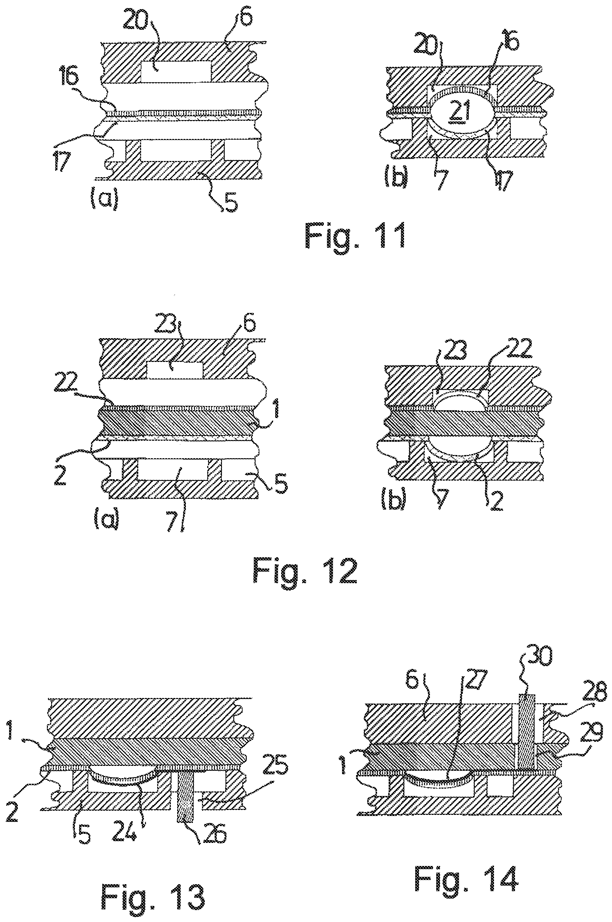

Aus den Figuren 10 und 11 gehen Ausführungsbeispiele mit Flusszellen hervor, die nur aus zwei flexiblen, elastischen, unstrukturierten Folien 16 und 17 bestehen. Ein Element 5 mit einer Vertiefung 7 und ein Gegenelement 6 drücken die Folien zusammen. An die Vertiefung kann ein Unterdruck angelegt werden.

In dem Ausführungsbeispiel von Fig. 10 weist das Gegenelement 6 als Einlage einen Saugkörper 18 mit Saugporen auf, der ebenfalls mit einer Unterdruckleitung 19 in Verbindung gebracht werden kann. Während der an die Vertiefung 7 angelegte Unterdruck für eine Auswölbung der Folie 17 sorgt, wird die Folie 16 durch den an den Saugkörper 18 angelegten Unterdruck, wie Fig. 10b zeigt, an der der Folie 16 zugewandten ebenen Fläche des Gegenelements 6 bzw. Saugkörper 18 festgehalten. Vorzugsweise ist der Saugkörper 18 durch ein Sintermetall gebildet.

Bei dem Ausführungsbeispiel von Fig. 11 ist anstelle des Saugkörpers 18 in dem Gegenelement 6 eine Vertiefung 20 vorgesehen, die in ihren Abmessungen der Vertiefung 7 des Elements 5 gleicht. Sowohl an die Vertiefung 7 als auch die Vertiefung 20 kann ein Unterdruck angelegt werden. Gemäß Fig. 11b führt dies dazu, dass die Folie 17 in die Vertiefung 7 und die Folie 16 in die Vertiefung 20 hinein ausgewölbt wird und ein Fluidleitungskanal 21 mit entsprechend großem, näherungsweise runden Querschnitt entsteht.

Bei einem in Fig. 12 gezeigten Ausführungsbeispiel sind Folien 2 und 22 auf einander gegenüberliegenden Seiten eines Substrats 1 angeordnet. Ein Element 5 weist eine Vertiefung 7, ein Gegenelement 6 eine Vertiefung 23 auf. An die Vertiefungen 7,23 kann ein Saugunterdruck angelegt werden, durch den sich die Folie 2 in die Vertiefung 7 hinein und die Folie 22 in die Vertiefung 23 hinein auswölbt. Auf beiden Seiten des Substrats 1 ist eine Hohlraumstruktur gebildet, wobei diese Hohlraumstrukturen einander gleichen oder unterschiedlich sein können.

In den Figuren 13 bis 15 gezeigte Ausführungsbeispiele verwenden Flusszellen, in welche Dünnschichtelektroden, z.B. aus Gold, Silber, Platin, Aluminium, ITO oder anderen Metallen oder Metalloxiden integriert sind und die z.B. als elektrische Sensoren, Aktuatoren oder Widerstandsheizungen dienen können. Die üblichen Schichtdicken liegen zwischen 10 Nanometer und 500 Nanometer, insbesondere zwischen 20 Nanometer und 200 Nanometer.

Fig. 13 zeigt eine Flusszelle mit einem Substrat 1 und einer Folie 2, auf der außenseitig eine Elektrode 24 angebracht ist. Ein an die Flusszelle andrückbares Element 5 weist einen Durchgang 25 für ein die Elektrode 24 kontaktierendes Element 26 auf.

Bei dem Ausführungsbeispiel von Fig. 14 ist eine Elektrode 27 auf der Innenseite einer Folie 2 zwischen der Folie 2 und einem Substrat 1 angeordnet. Ein an das Substrat 1 anlegbares Gegenelement 6 weist einen Durchgang 28 und das Substrat 1 einen Durchgang 29 für ein die Elektrode 27 kontaktierendes Element 30 auf.

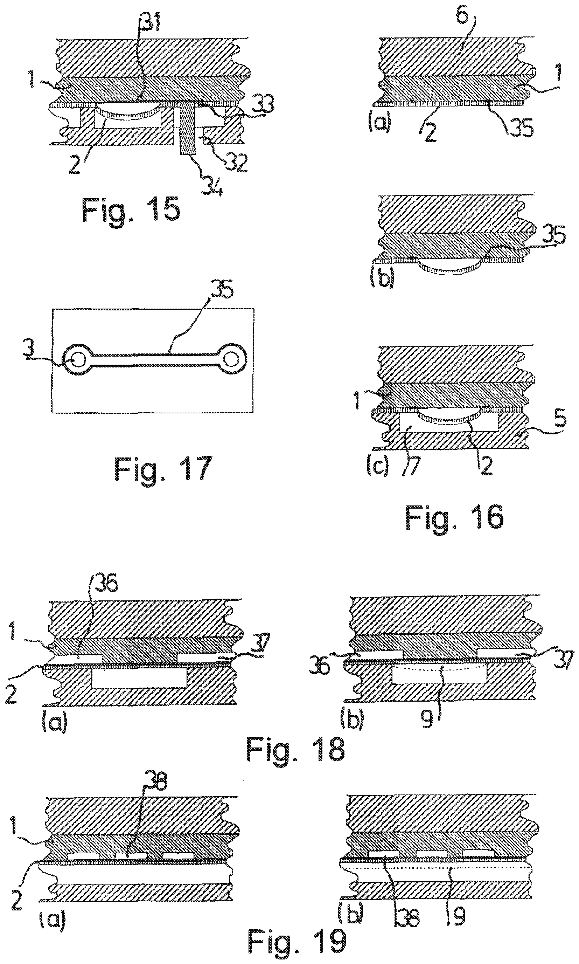

Bei dem Ausführungsbeispiel von Fig. 15 ist eine Elektrode 31 zwischen einer Folie 2 und einem Substrat 1 in einer Ausnehmung im Substrat 1 untergebracht. Ein an die Folie 2 andrückbares Element 5 weist einen Durchgang 32 und die Folie 2 ein Durchgangsloch 33 für ein die Elektrode 30 kontaktierendes Element 34 auf. Zur Isolierung der Elektrode 31 von dem zu transportierenden Fluid kann diese z.B. durch eine dielektrische Beschichtung oder Folie abgedeckt sein.

Bei den vorangehend gezeigten Ausführungsbeispielen ist die seitliche Begrenzung der gebildeten Hohlraumstrukturen durch das die Teile der Flusszelle zusammendrückende Element 5 bzw. Gegenelement 6 bestimmt. Fig. 16 zeigt ein Ausführungsbeispiel, bei dem diese Begrenzung durch eine fluiddichte Randverbindung 35 zwischen einer Folie 2 und einem Substrat 1 gegeben ist. Bei der fluiddichten Randverbindung 35 handelt es sich vorzugsweise um eine Schweißverbindung. Wie Fig. 16c erkennen lässt, ist ein in einem Element 5 gebildeter Hohlraum 7 breiter als der Abstand zwischen einander gegenüberliegenden Abschnitten der Randverbindung 35. Vorteilhaft wird dadurch erreicht, dass bei Positionierung des Elements 5 gegenüber dem kanalartigen Hohlraum größere Positioniertoleranzen zulässig sind.

Fig. 17 zeigt in einer Draufsicht die durch Laserverschweißen erzeugte Randverbindung 35 der mit Durchgangslöchern 3 im Substrat in Verbindung stehenden kanalartigen Hohlraumstruktur.

Die durch die Betreibervorrichtung in der Flusszelle erzeugte Hohlraumstruktur kann auch nur der Ergänzung einer bereits bestehenden, permanenten Hohlraumstruktur dienen. Fig. 18 zeigt ein entsprechendes Ausführungsbeispiel mit einem Substrat 1, in das permanente, kanalförmige, von rechts nach links oder umgekehrt durchflossene Hohlräume 36 und 37 eingebracht sind. Zusätzlich lässt sich ein Fluidströmungskanal 9 erzeugen, der diese Hohlräume verbindet.

Bei dem in Fig. 19 gezeigten Ausführungsbeispiel sind in einem Substrat 1 mehrere permanente Hohlräume 38 untergebracht, z.B. Reaktions-, Detektions- und Mischräume in Form von Vertiefungen mit typischen lateralen Abmessungen von 0,1 bis 1.000 mm². Wie Fig. 19b zeigt, lassen sich die Reaktionshohlräume 38 durch einen herstellbaren Fluidleitungskanal 9 in strömungsrichtung miteinander verbinden.

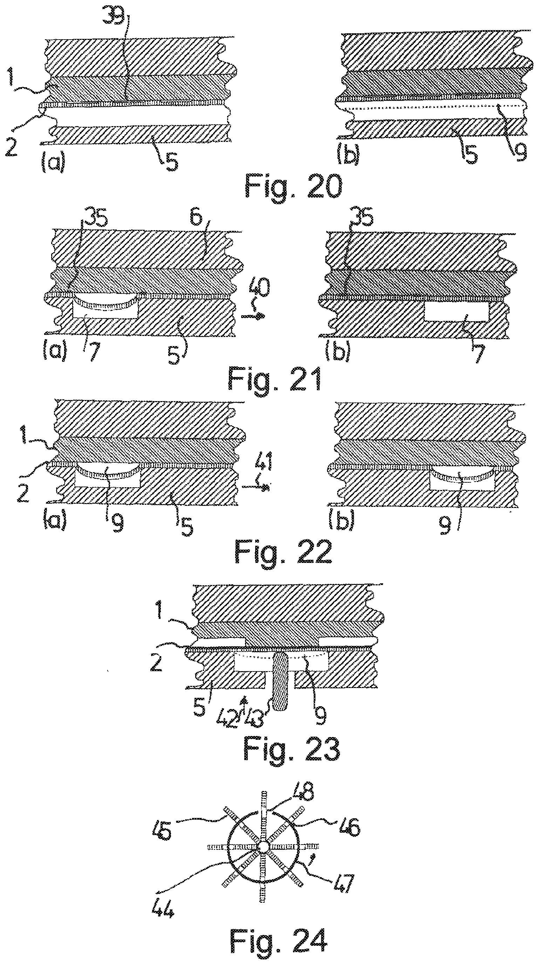

Bei dem Ausführungsbeispiel von Fig. 20 sind anstelle der Hohlräume 38 auf dem Substrat oder der Folie funktionalisierte Bereiche 39 vorgesehen, die z.B. mit Trockenreagenzien, DNA-Sequenzen, Proteinen, Zellen oder PCR-Reagenzien belegt sind. Typischerweise beträgt die Höhe solcher Belegungen nur wenige Mikrometer. Wie bei dem Ausführungsbeispiel von Fig. 19 lassen sich die funktionalisierten Bereiche 39 durch einen herstellbaren Fluidleitungskanal 9 in strömungsrichtung miteinander verbinden.

Die Betreibervorrichtung kann über ihre Funktion zur Bildung einer Hohlraumstruktur hinaus noch weitere Funktionen übernehmen. Bei einem in Fig. 21 gezeigten Ausführungsbeispiel ist ein Gegenelement 6 gemäß Pfeil 40 zusätzlich lateral bewegbar. Ein durch eine permanente Randverbindung 35 begrenzter Bereich lässt sich so, wie in Fig. 21b gezeigt, in eine Position verschieben, in welcher ein gebildeter Fluidleitungskanal 9 wieder aufgehoben ist.

Bei dem Ausführungsbeispiel von Fig. 22 ist ebenfalls ein Element 5 gemäß Pfeil 41 lateral bewegbar. Ein herstellbarer Fluidleitungskanal 9 ist durch das gegen die Flusszelle anliegende Element 5 begrenzt. d.h. eine Folie 2 ist mit einem Substrat 1 nicht verbunden. Durch Verschiebung des Elements 5 gemäß Pfeil 41 lässt sich auch ein gebildeter Kanal oder Kanalbereich 9 und damit das sich darin befindliche Fluid lateral verschieben.

Bei einem in Fig. 23 gezeigten Ausführungsbeispiel weist ein an eine Flusszelle mit einem Substrat 1 und einer Folie 2 ansetzbares Element 5 einen gemäß Pfeil 42 senkrecht zur Substrat- bzw. Folienebene bewegbaren Schieber 43 auf, der einen gebildeten Kanal 9 linienartig zusammendrückt und somit eine Ventilfunktion ausübt.

Fig. 24 zeugt einen Teil einer Flusszelle mit einem zentralen Einlass 44 und sich von dem Einlass 44 sternförmig erstreckenden Fluidleitungskanälen 45, die teilweise permanent in einem Substrat ausgebildet sind und einen Abschnitt 46 aufweisen, der durch strömendes Fluid selbst zwischen dem Substrat und einer Folie aufschließbar ist. Eine zum zentralen Einlass 44 koaxiale Ventilringauflage 47 weist eine Unterbrechung 48 auf. Je nach Lage der Unterbrechung 48 lässt sich einer der Fluidleitungsstränge 45 freigeben.

Es versteht sich, dass die vorangehend beschriebenen Ausführungsbeispiele unter Bildung komplexer Flusszellen miteinander kombinierbar sind.

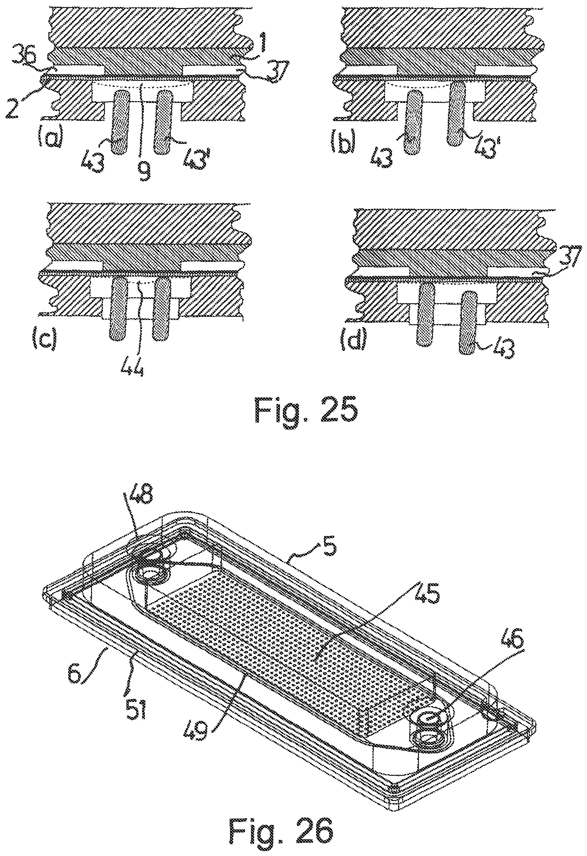

Ein in Fig. 25 dargestelltes Ausführungsbeispiel unterscheidet sich von dem Ausführungsbeispiel gemäß Fig. 23 durch einen weiteren Schieber 43'. Ein zu dosierendes Medikament fließt von links nach rechts durch einen permanenten Kanal 36 und erschließt sich durch seinen Eigendruck einen Kanal 9, bevor es durch einen weiteren permanenten Kanal 37 hindurch weiterfließt. Im Dosierbetrieb ist zunächst der Schieber 43' geschlossen. Die Erschließung des Kanals 9 reicht bis zur Absperrung durch diesen Schieber. Durch Schließung des Schiebers 43 wird eine bestimmte Dosierungsmenge zwischen den durch die Schieber 43,43' gebildeten Absperrungen eingeschlossen (Fig. 25c). Zur genauen Bestimmung der eingeschlossenen Menge kann die Höhe der Auswölbung der Folie 2 mittels optischem Sensor durch Transmission, Reflexion oder Triangulation gemessen werden, alternativ elektrisch, z.B. kapazitiv unter Verwendung von Dünnschichtelektroden.

Die eingeschlossene Dosierungsmenge kann durch Öffnung des Schiebers 43' frei gegeben werden. Durch die Rückstellkraft der Folie 2 wird die Dosierungsmenge in den Kanal 37 gedrückt.

Der Kanalbereich 9 könnte zusätzlich mit einem permanenten geschlossenen und mit Luft oder anderem Gas befülltem Reservoir (nicht gezeigt) verbunden sein, welches als Druckspeicher zusätzlich zur Auswölbung der Folie dient und den Transport der Dosiermenge unterstützt.

Wird zusätzlich zu den beiden Aktoren bzw. Schiebern der zum Kanalbereich 9 korrespondierende Folienbereich mit einer entsprechend der Erfindung vorgeschlagenen Einrichtung zur direkten Erzeugung einer die Folienwölbung bewirkenden Kraft verbunden, lässt sich so eine Pumpfunktion realisieren, bei der ein zwischen den Schiebern zyklisch geformter Kanalbereich 9 als Pumpkammer und die beiden Aktoren als Eingangs- bzw. Ausgangsventil fungieren.

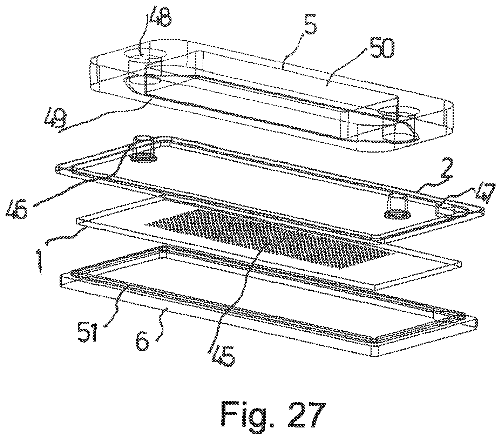

Die Figuren 26 und 27 zeigen ein Ausführungsbeispiel mit einer Flusszelle, die eine Substratplatte 1 aus Glas in Form eines Objektträgers umfasst. Auf der gläsernen Substratplatte 1 ist ein Feld funktionalisierter Bereiche 45 gebildet, wie sie zum Beispiel üblicherweise bei DNA-Hybridisierungsuntersuchungen verwendet werden (DNA-Arrays). Gegen die Substratplatte 1 liegt eine flexible elastische Folie 2 aus Kunststoff, bevorzugt aus PC, COC, COP, PMMA, PC. an, die mit Durchgangslöchern und zu den Durchgangslöchern konzentrischen Anschlussstücken 46 versehen ist. Vorzugsweise bestehen die Anschlussstücke aus Kunststoff und sind mit der Folie verschweißt. Positionierstrukturen 47 am Rand der Folie sorgen für eine genaue Ausrichtung der Folie zur Substratplatte. Ein an die Folie 2 ansetzbares Element 5 mit Ausnehmungen 48 zur Aufnahme der Anschlussstücke 46 ist mit einem umlaufenden, gegen die Folie 2 anlegbaren Steg 49 versehen, welcher, in Draufsicht gesehen, das Feld funktionalisierter Bereiche 45 und die Anschlussstücke 46 umgibt. Das Element 5 weist ferner einen Einsatz 50 aus porösem Sintermetall auf. An die den Einsatz aufnehmende Ausnehmung kann ein Unterdruck angelegt werden. Ein gegen die Substratplatte 1 anlegbares Gegenelement 6 ist mit einem umlaufenden, die Substratplatte 1 positionierenden Rahmen 51 versehen.

Im Betrieb der Flusszelle werden die Anschlussstücke 46 mit Fluid zu- und abführenden Leitungen, insbesondere Schlauchleitungen, verbunden. Ein an den Sintermetallbereich des Elements 5 angelegter Unterdruck führt zum Anlegen der Folie 2 an den Sintermetalleinsatz 50 und damit im Bereich der funktionalisierten Fläche des Glassubstrats zur Bildung eines durch den Steg 49 begrenzten Hohlraumes konstanter Höhe von bevorzugt 20 bis 200 µm. Die Höhe des Stegs 49 entspricht dabei der Zielhöhe des Hohlraumkanals 9 zuzüglich der Dicke der verwendeten Folie 2. In den Bereichen in Flussrichtung vor und hinter der funktionalisierten Fläche erfolgt die Erschließung der jeweiligen Hohlraumbereiche teilweise durch das unter Druck zugeführte Fluid selbst.

Abwechselndes Anlegen von Unter- und Überdruck an den Sintermetalleinsatz 50 während eines Hybridisierungsprozesses führt durch die Auslenkung der Folie zu einer in der Regel sanften Fluidbewegung und unterstützt vorteilhaft den Stoffaustausch sowie die DNA-Hybridisierung.

Nach einem Hybridisierungsprozess kann die Flusszelle vor ihrer Demontage und Entsorgung mit Luft durchströmt und entleert werden.

Bei optischer Transparenz der Substratplatte 1 kann der Verlauf der Reaktionen optisch oder fluoreszenzoptisch direkt beobachtet werden. Anderenfalls erfolgt die Detektion nach der Montage der Flusszelle unter Verwendung der üblichen Auswertgeräte.

Die vorangehend beschriebenen Flusszellen eignen sich für den Einsatz zur Analyse und/oder Synthese von Fluiden und Gasen. In Betracht kommen Analysen mittels Kapilarelektrophorese, Immunoassays, molekulargenetische Assays, zellbasierte Assays, Vorrichtungen zur Fluidsteuerung in miniaturisierten Brennstoffzellen, Dispensiersysteme, Mikroreaktoren sowie der Aufbau miniaturisierter Pump- und Ventilsysteme.

## Patentansprüche

1. Anordnung aus einer Flusszelle und einer Vorrichtung zum Betreiben der Flusszelle, wobei die Flusszelle mindestens zwei Lagen (1,2;16,17) aufweist, zwischen denen durch die Betreibervorrichtung (5,6) unter Auswölbung von wenigstens einer der beiden Lagen (1,2;16,17) eine Hohlraumstruktur (9) herstellbar oder eine bestehende Hohlraumstruktur veränderbar ist,
**dadurch gekennzeichnet,**
**dass** die Betreibervorrichtung (5,6) ein zum Andrücken an die Flusszelle vorgesehenes Element (5) mit einer Vertiefung (7;20;23) umfasst, wobei in die Vertiefung (7;20;23) des angedrückten Elements (5) hinein die betreffende Lage unter Bildung der Hohlraumstruktur (9) auswölbbar ist und dass das angedrückte Element (5) unter Zusammendrücken der Lagen (5,6) die Hohlraumstruktur lateral fluiddicht begrenzt.

2. Anordnung nach Anspruch 1,
**dadurch gekennzeichnet,**
**dass** die Betreibervorrichtung (5,6) zur Auswölbung der betreffenden Lage (1,2:16,17) durch direkte Erzeugung einer auswölbenden Kraft oder/und indirekt durch Eindrücken eines Fluids in die Flusszelle vorgesehen ist.

3. Anordnung nach Anspruch 2,
**dadurch gekennzeichnet,**
**dass** die direkt zur Auswölbung erzeugte Kraft elektrischer, magnetischer, mechanischer oder/und pneumatischer Natur ist.

4. Anordnung nach einem der Ansprüche 1 bis 3,
**dadurch gekennzeichnet,**
**dass** die Betreibervorrichtung (5,6) ein dem Element (5) gegenüberliegendes Gegenelement (6), ggf. mit einer zu der Vertiefung (7) korrespondierenden Vertiefung (20), umfasst.

5. Anordnung nach einem der Ansprüche 1 bis 4,
**dadurch gekennzeichnet,**
**dass** an die Vertiefung (7;20;23) bzw. Vertiefungen ein Unter- und ggf. auch ein Überdruck anlegbar ist.

6. Anordnung nach einem der Ansprüche 1 bis 5,
**dadurch gekennzeichnet,**
**dass** die Betreibervorrichtung Einrichtungen zur statischen oder/und dynamischen Steuerung des Ausmaßes der Auswölbung umfasst.

7. Anordnung nach einem der Ansprüche 1 bis 6,
**dadurch gekennzeichnet,**
**dass** die Betreibervorrichtung Einrichtungen zur lateralen Verschiebung der gebildeten Auswölbung umfasst.

8. Anordnung nach einem der Ansprüche 1 bis 7,
**dadurch gekennzeichnet,**
**dass** die Hohlraumstruktur wenigstens einen Fluidleitungskanal (9) umfasst.

9. Anordnung nach einem der Ansprüche 1 bis 8,
**dadurch gekennzeichnet,**
**dass** die Flusszelle zusätzlich zu der durch Auswölbung gebildeten Hohlraumstruktur (9) eine permanente Hohlraumstruktur (36,37,38) und/oder weitere Elemente, wie Elektroden (24,27,31) und/oder funktionalisierte Bereiche (39,45) umfasst.

10. Anordnung nach einem der Ansprüche 1 bis 9,
**dadurch gekennzeichnet,**
**dass** wenigstens eine der beiden Lagen (1,2;16,17) mindestens eine mit der Hohlraumstruktur verbundene Öffnung (3) aufweist.

11. Anordnung nach einem der Ansprüche 1 bis 10,
**dadurch gekennzeichnet,**
**dass** es sich bei einer der beiden Lagen (1,2) um eine flexible Folie (2) und der anderen Lage um eine gegenüber der Folie (2) steifere Substratplatte (1) handelt.

12. Anordnung nach einem der Ansprüche 1 bis 11,
**dadurch gekennzeichnet,**
**dass** die beiden Lagen an ihren einander zugewandten Flächen angrenzend an die Hohlraumstruktur (9) oder/und am Rand von wenigstens einer der beiden Lagen fluiddicht miteinander verbunden sind.

13. Anordnung nach einem der Ansprüche 1 bis 12,
**dadurch gekennzeichnet,**
**dass** die beiden Lagen aus verschiedenen, durch Stoffschluss unverbindbaren Materialien bestehen.

## Claims

1. Arrangement consisting of a flow cell and a device for operating the flow cell, wherein the flow cell has at least two layers (1,2; 16, 17) between which a cavity structure (9) can be produced or an existing cavity structure can be changed by the operator device (5, 6) with curvature of at least one of the two layers (1, 2; 16, 17),
**characterized**
**in that** the operator device (5, 6) comprises an element (5) with a depression (7; 20; 23) that is provided for pressing onto the flow cell, wherein the relevant layer can be curved into the depression (7; 20; 23) of the pressed-on element (5) with formation of the cavity structure (9), and in that the pressed-on element (5) laterally delimits the cavity structure in a fluid-tight manner with compression of the layers (5, 6).

2. Arrangement according to Claim 1,
**characterized**
**in that** the operator device (5, 6) is provided for curving the relevant layer (1, 2; 16, 17) by direct generation of a curving force and/or indirectly by pressing a fluid into the flow cell.

3. Arrangement according to Claim 2,
**characterized**
**in that** the force which is directly generated for curving is of electrical, magnetic, mechanical and/or pneumatic nature.

4. Arrangement according to one of Claims 1 to 3,
**characterized**
**in that** the operator device (5, 6) comprises a counter-element (6) situated opposite the element (5), optionally with a depression (20) corresponding to the depression (7) .

5. Arrangement according to one of Claims 1 to 4,
**characterized**
**in that** a negative pressure and optionally also an overpressure can be applied to the depression (7; 20; 23) or depressions.

6. Arrangement according to one of Claims 1 to 5,
**characterized**
**in that** the operator device comprises means for the static and/or dynamic control of the extent of the curvature.

7. Arrangement according to one of Claims 1 to 6,
**characterized**
**in that** the operator device comprises means for laterally displacing the curvature formed.

8. Arrangement according to one of Claims 1 to 7,
**characterized**
**in that** the cavity structure comprises at least one fluid-channelling duct (9).

9. Arrangement according to one of Claims 1 to 8,
**characterized**
**in that**, in addition to the cavity structure (9) formed by curvature, the flow cell comprises a permanent cavity structure (36, 37, 38) and/or further elements, such as electrodes (24, 27, 31) and/or functionalized regions (39, 45) .

10. Arrangement according to one of Claims 1 to 9,
**characterized**
**in that** at least one of the two layers (1, 2; 16, 17) has at least one opening (3) connected to the cavity structure.

11. Arrangement according to one of Claims 1 to 10,
**characterized**
**in that** one of the two layers (1, 2) is a flexible film (2) and the other layer is a substrate plate (1) which is stiffer than the film (2).

12. Arrangement according to one of Claims 1 to 11,
**characterized**
**in that** the two layers are connected to one another in a fluid-tight manner at their mutually facing surfaces adjoining the cavity structure (9) and/or at the edge of at least one of the two layers.

13. Arrangement according to one of Claims 1 to 12,
**characterized**
**in that** the two layers consist of different materials which are not connectable by substance-to-substance bonding.

## Revendications

1. Ensemble constitué par une cellule à écoulement et par un dispositif pour le fonctionnement de la cellule à écoulement, la cellule à écoulement présentant au moins deux couches (1, 2 ; 16, 17) entre lesquelles une structure d'espace creux (9) peut être réalisée ou une structure d'espace creux existante peut être modifiée par le dispositif de fonctionnement (5, 6) avec un bombement d'au moins une des deux couches (1, 2 ; 16, 17), **caractérisé en ce que** le dispositif de fonctionnement (5, 6) comprend un élément (5), destiné à être comprimé contre la cellule à écoulement, présentant un creux (7 ; 20 ; 23), la couche en question pouvant être bombée dans le creux (7 ; 20 ; 23) de l'élément comprimé (5) avec formation de la structure d'espace creux (9) et **en ce que** l'élément comprimé (5), par l'écrasement des couches (5, 6), limite la structure d'espace creux latéralement de manière étanche aux fluides.

2. Ensemble selon la revendication 1, **caractérisé en ce que** le dispositif de fonctionnement (5, 6) est prévu pour le bombement de la couche en question (1, 2 ; 16, 17) par une génération directe d'une force de bombement et/ou indirectement par la compression d'un fluide dans la cellule à écoulement.

3. Ensemble selon la revendication 2, **caractérisé en ce que** la force générée directement pour le bombement est de nature électrique, magnétique, mécanique et/ou pneumatique.

4. Ensemble selon l'une quelconque des revendications 1 à 3, **caractérisé en ce que** le dispositif de fonctionnement (5, 6) comprend un contre-élément (6) opposé à l'élément (5) et présentant le cas échéant un creux (20) correspondant au creux (7).

5. Ensemble selon l'une quelconque des revendications 1 à 4, **caractérisé en ce qu'**une dépression et le cas échéant également une surpression peut être appliquée au niveau du creux (7 ; 20 ; 23) ou des creux.

6. Ensemble selon l'une quelconque des revendications 1 à 5, **caractérisé en ce que** le dispositif de fonctionnement comprend des moyens pour la régulation statique et/ou dynamique du niveau du bombement.

7. Ensemble selon l'une quelconque des revendications 1 à 6, **caractérisé en ce que** le dispositif de fonctionnement comprend des moyens pour le déplacement latéral du bombement formé.

8. Ensemble selon l'une quelconque des revendications 1 à 7, **caractérisé en ce que** la structure d'espace creux comprend au moins un canal de guidage de fluide (9).

9. Ensemble selon l'une quelconque des revendications 1 à 8, **caractérisé en ce que** la cellule à écoulement comprend, en plus de la structure d'espace creux (9) formée par le bombement, une structure d'espace creux (36, 37, 38) permanente et/ou d'autres éléments, tels que des électrodes (24, 27, 31) et/ou des zones fonctionnalisées (39, 45).

10. Ensemble selon l'une quelconque des revendications 1 à 9, **caractérisé en ce qu'**au moins une des deux couches (1, 2 ; 16, 17) présente au moins une ouverture (3) reliée à la structure d'espace creux.

11. Ensemble selon l'une quelconque des revendications 1 à 10, **caractérisé en ce qu'**il s'agit, pour une des deux couches (1, 2), d'une feuille flexible (2) et, pour l'autre couche, d'une plaque de substrat (1) plus rigide que la feuille (2).

12. Ensemble selon l'une quelconque des revendications 1 à 11, **caractérisé en ce que** les deux couches sont reliées l'une à l'autre de manière étanche aux fluides au niveau de leurs surfaces orientées l'une vers l'autre, adjacentes à la structure d'espace creux (9) et/ou au niveau du bord d'au moins une des deux couches.

13. Ensemble selon l'une quelconque des revendications 1 à 12, **caractérisé en ce que** les deux couches sont constituées par des matières différentes qui ne peuvent être reliées par une liaison par matière.
